# EUROPÄISCHE PATENTANMELDUNG

(11) **EP 0 761 727 A1**
(43) Veröffentlichungstag der Anmeldung: **12.03.1997**
(21) Anmeldenummer: 96114058.9
(22) Anmeldetag: 03.09.1996
(51) Int. Cl.: C08J 9/00

(54) **Verfahren zur Herstellung von Polyurethan-Hart- oder -Halbhartschaumstoffen und derartige Polyurethan-Schaumstoffe enthaltende Verbundelemente**

(30) Priorität: 11.09.1995 DE 19533610
(71) Anmelder: BASF Aktiengesellschaft, 67063 Ludwigshafen (DE)
(72) Erfinder: Horn, Peter, Dr., 69118 Heidelberg (DE); Lehr, Gerhard, 67365 Schwegenheim (DE); Chakrabarti, Sarbananda, 68169 Mannheim (DE); Hertel, Dieter, 69181 Leimen (DE); Jung, Ludwig, 82291 Mammendorf (DE)

(57) **Zusammenfassung**

Gegenstand der Erfindung sind ein Verfahren zur Herstellung von Polyurethan-Hartschaumstoffen, vorzugsweise von Polyurethan-Halbhartschaumstoffen, durch Umsetzung von
a) organischen und/oder modifizierten organischen Polyisocyanaten mit
b) höhermolekularen Polyhydroxylverbindungen und gegebenenfalls
c) niedermolekularen Kettenverlängerungs- und/oder Vernetzungsmitteln
in Gegenwart von
d) Wasser oder Mischungen aus Wasser und physikalisch wirkenden Treibmitteln (a)
e) gegebenenfalls Katalysatoren
f) mindestens einem Zusatzstoff ausgewählt aus mindestens einer Verbindung der Formeln (f1) bis (f4) 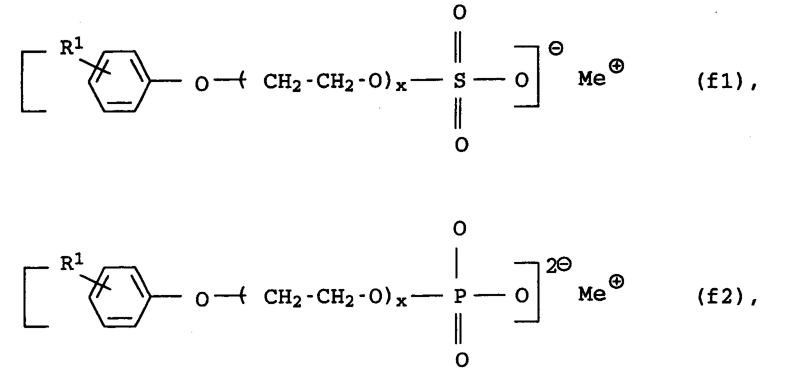 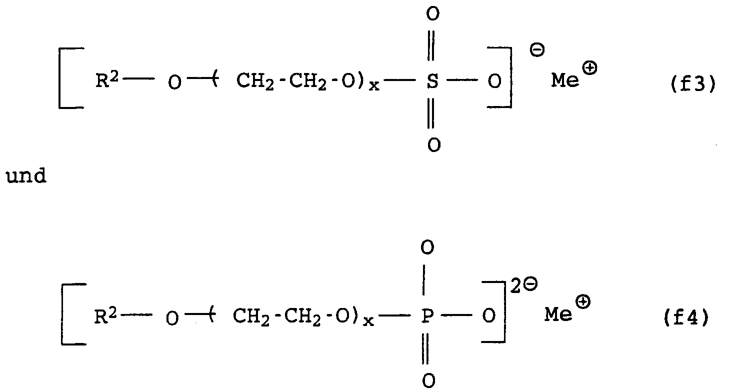
in denen bedeuten
   - R¹ und R²: lineare oder verzweigte Alkylreste mit 1 bis 32 C-Atomen,
   - X: eine ganze Zahl von 1 bis 35 und
   - Me: Natrium, Kalium, Ammonium, Calcium und Magnesium mit der Maßgabe, daß die Anzahl der Kationen und Anionen äquivalent ist,
   sowie gegebenenfalls zusätzlichen anderen Zusatzstoffen und
g) gegebenenfalls Hilfsmitteln
   und
Verbundelemente, bestehend aus
A) mindestens einer Deckschicht und
B) mindestens einer Schicht aus einem Polyurethan-Hart- oder -Halbhartschaumstoff, hergestellt nach dem erfindungsgemäßen Verfahren.

## Beschreibung

Gegenstand der Erfindung sind ein Verfahren zur Herstellung von Polyurethan(PU)-Hartschaumstoffen oder Vorzugsweise PU-Halbhartschaumstoffen durch Umsetzung von
a) organischen und/oder modifizierten organischen Polyisocyanaten mit
b) höhermolekularer Polyhydroxylverbindungen und gegebenenfalls
c) niedermolekularen Kettenverlängerungs- und/oder Vernetzungsmitteln
in Gegenwart von
d) Treibmitteln,
e) gegebenenfalls Katalysatoren,
f) Zusatzstoffen und
g) gegebenenfalls Hilfsmitteln,
wobei verwendet werden als Treibmittel (d) Wasser oder Mischungen aus Wasser und physikalisch wirkenden Treibmitteln und als Zusatzstoff (f) mindestens eine Verbindung der Formeln (f1) bis (f4) 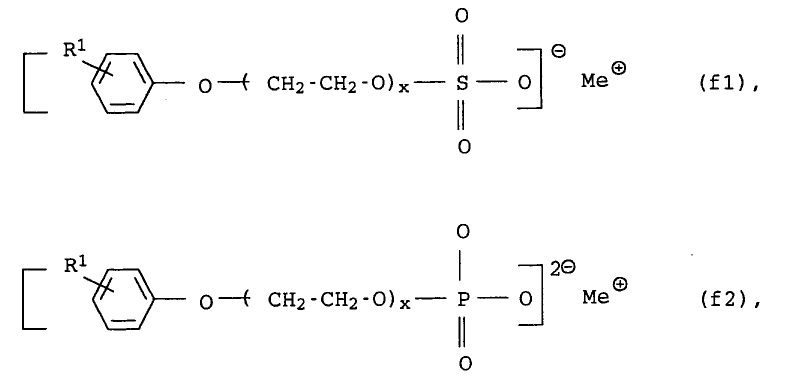 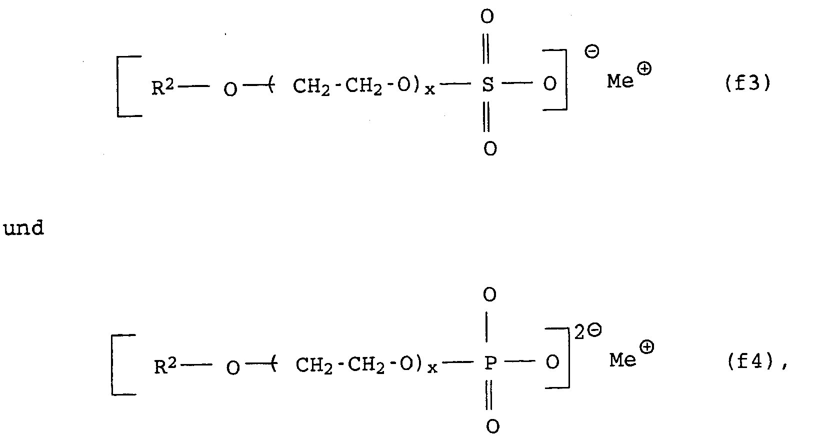 in denen bedeuten
- R¹ und R²: lineare oder verzweigte Alkylreste mit 1 bis 32 C-Atomen,
- X: eine ganze Zahl von 1 bis 35 und
- Me: Natrium, Kalium, Ammonium, Calcium und Magnesium mit der Maßgabe, daß die Anzahl der Kationen und Anionen äquivalent ist,
und Verbundelemente, die bestehen aus
A) mindestens einer Deckschicht und
B) mindestens einer Schicht aus einem PU-Hart- oder vorzugsweise PU-Halbhartschaumstoff, hergestellt nach dem erfindungsgemäßen Verfahren.

Die Herstellung von PU-Schaumstoffen durch Umsetzung von organischen Polyisocyanaten mit höhermolekularen Polyhydroxylverbindungen und gegebenenfalls Kettenverlängerungs- und/oder Vernetzungsmitteln in Gegenwart von Katalysatoren und Treibmitteln sowie gegebenenfalls Zusatzstoffen und Hilfsmitteln ist bekannt und wird in zahlreichen Patent- und Literaturpublikationen beschrieben. Beispielhaft genannt sei das Kunststoff-Handbuch, Band VII, Polyurethane, 1. Auflage, 1966, herausgegeben von Dr. R. Vieweg und Dr. A. Höchtlen, 2. Auflage, 1983, herausgegeben von Dr. G. Oertel und 3. Auflage, 1993, herausgegeben von Dr. G.W. Becker und Dr. D. Braun, Carl Hanser Verlag, München, Wien.

Bekannt ist ferner die Herstellung von PU-Halbhartschaumstoffen nach dem Prepolymer-Verfahren, üblicherweise auf der Basis von Toluylen-diisocyanat (TDI)-Prepolymeren, und dem one shot-Verfahren, vorteilhafterweise unter Verwendung von Mischungen aus Diphenylmethan-diisocyanaten (MDI) und Polyphenyl-polymethylenpolyisocyanaten, sogenanntem Roh-MDI, als Polyisocyanate. Durch eine gezielte Auswahl von höhermolekularen Polyhydroxylverbindungen und Kettenverlängerungs- und/oder Vernetzungsmitteln und durch unterschiedliche Mengen an Polyisocyanaten und Wasser können nach diesen Verfahren PU-Halbhartschaumstoffe mit unterschiedlichen mechanischen Eigenschaften hergestellt werden. PU-Halbhartschaumstoffe können ferner ohne die Mitverwendung von Wasser nach dem Frothing-Verfahren unter Zusatz von Dichlordifluormethan als Treibmittel hergestellt werden. Als Polyhydroxylverbindungen findet hierbei eine Kombination aus verzweigten, höhermolekularen Polyoxyalkylen-polyolen und Amin-gestarteten Kettenverlängerungsmittel mit Hydroxylzahlen im Bereich von 450 bis 500 Verwendung. Aktiviert werden kann die Polyadditionsreaktion durch organischen Zinnverbindungen (Kunststoff-Handbuch, Band VII, Polyurethane, 2. Auflage, 1983, herausgegeben von Dr. G. Oertel, Carl Hanser Verlag, München, Wien).

PU-Schaumstoffe werden zweckmäßigerweise unter Zusatz von tertiären Aminen als Katalysatoren hergestellt, da diese sowohl die Reaktion zwischen den Hydroxylgruppen der Polyhydroxylverbindungen und NCO-Gruppen der Polyisocyanate, die Urethanbildung, als auch die Umsetzung zwischen Wasser und NCO-Gruppen unter Bildung von Aminogruppen und Kohlendioxid als Treibgas, die Treibreaktion, beschleunigen, wobei insbesondere beim one shot-Verfahren die Geschwindigkeiten der nebeneinander ablaufenden Reaktionen exakt aufeinander abgestimmt sein müssen. Da neben der Polyadditions- und Treibreaktion bei der Schaumstoffbildung noch Vernetzungsreaktionen unter Ausbildung von Allophanat-, Harnstoff-, Biuret- und Cyanuratstrukturen ablaufen können, müssen die eingesetzten Katalysatoren einen synchronen Ablauf dieser verschiedenartigen Umsetzungen gewährleisten. Die Katalysatoren dürfen weder durch einen frühzeitigen Einbau in das Polyurethangerüst ihre katalytische Wirksamkeit verlieren, noch den hydrolytischen Zerfall des hergestellten PU-Schaumstoffs beschleunigen.

Nachteilig ist der unangenehme Geruch vieler in der Praxis als Katalysator verwendeter tertiärer Amine, der sich auf die hergestellten PU-Schaumstoffe übertragen und ihre Verwendung für gewisse Anwendungen negativ beeinflussen kann. Nach Angaben der DE-A-23 21 884 (GB-A-1 344 038) werden daher zur Herstellung von PU-Schaumstoffen mit einem tertiären Amin als Katalysator hergestellte Polyetherpolyole in Verbindung mit einer Säure und einem Silikonöl verwendet.

Geruchsarme PU-Schaumstoffe können auch nach der Lehre der EP-A-0 624 611 (CA-A-2 122 973) erhalten werden. Nach diesem Verfahren werden die PU-Schaumstoffe, vorzugsweise PU-Halbhartschaumstoffe, aus den an sich üblichen Aufbaukomponenten hergestellt, wobei jedoch als Vernetzungsmittel Polyoxyalkylen-polyole mit einer Hydroxylzahl von 200 bis 1300 und einem Gehalt an Alkaliionen von 150 bis 1200 ppm in Verbindung anorganischen und/oder organischen Säuren verwendet werden. Die beschriebenen PU-Schaumstoffe fanden u.a. Verwendung zur Hinterschäumung von Folien aus einem PVC/ABS-Polymerisatgemisch.

Verbundelemente, die aus mindestens einer Deckschicht aus PVC oder einem polyvinylchloridhaltigen Polymerisatgemisch und einem PU-Halbhart- oder PU-Hartschaumstoff bestehen, werden ferner in der EP-A-0 490 145 (US-A-5 334 448) beschrieben.
Obgleich nach diesen Verfahren geruchsarme bzw. im wesentlichen geruchsfreie PU-Hart- und PU-Halbhartschaumstoffe mit guten bis sehr guten mechanischen Eigenschaften hergestellt werden können, die in der Technik, insbesondere in Verkehrsmitteln, eine breite Verwendung finden, konnten in manchen technischen Prozessen teilweise gewisse Produktionsschwankungen nicht vollständig unterbunden werden. Diese Produktionsschwankungen können bei der Hinterschäumung von Deckschichten zu Formteilen mit einer erhöhten Lunkerrate führen. Verwendet man zur Herstellung der PU-Hart- oder vorzugsweise PU-Halbhartschaumstoffe gegebenenfalls modifizierte Polyisocyanate und Wasser zur in situ Bildung von Kohlendioxid als alleiniges Treibmittel, so ist das Wasser in größeren Mengen, z.B. in Mengen von über 1,6 Gew.-%, bezogen auf die Polyhydroxylverbindungen, im allgemeinen in der sogenannten A-Komponente, das ist für den europäischen PU-Fachmann die Mischung aus den Aufbaukomponenten (b) bis (g), unlöslich. Diese Unverträglichkeit des Wassers mit den anderen Aufbaukomponenten führt zu einer inhomogen, trüben A-Komponente. Da diese Inhomogenität auch durch ständiges intensives Rühren üblicherweise nicht vollständig beseitigt werden kann, kann diese zu Produktionsschwankungen, verbunden mit einer beträchtlichen Nachbearbeitung der Formkörper und/oder erhöhten Ausschußraten, führen, die eine erhebliche Steigerung der Produktionskosten bewirken können.

Es hat daher nicht an Versuchen gefehlt, durch eine geeignete Auswahl an Polyhydroxylverbindungen, z.B. Polyoxypropylen-polyoxyethylen-polyolen mit einem wirksamen Anteil an hydrophilen Ethylenoxideinheiten oder Polyester-polyolen mit erhöhter Hydrophilie und/oder durch Zusatz von Emulgatoren mit den unterschiedlichsten chemischen Strukturen, wie z.B. oxethylierten Phenolen, C₉- bis C₁₁-Oxoalkoholen, Alkalistearaten, Alkaliparaffinsulfonaten, Polydimethylsiloxanen, Polyoxyalkylen-polydimethylsiloxan-Blockcopolymeren u.a. die Verträglichkeit zwischen Wasser und den übrigen Aufbaukomponenten in der A-Komponente zu verbessern.

Nach Angaben z.B. der DE-C-1 178 595 finden als Zusatzstoffe Additionsprodukte aus Anhydriden mehrbasischer Carbonsäuren an mehrwertige Alkohole Verwendung, deren Carboxylgruppen in Salzform vorliegen oder alkoxyliert sind. Die US-A-4 751 251 beschreibt eine oberflächenaktive Mischung für PU-Hartschaumstoffe, die besteht aus einer siloxanfreien organischen oberflächenaktiven Verbindung, einem Siloxan-Polyoxyalkan und einem C₁- bis C₃-Alkohol. Die EP-A-0 458 009 (US-A-5 183 830) beschreibt ein Verfahren zur Herstellung von hochelastischen Urethangruppen aufweisenden Schaumstoffen mit einer verminderten Stauchhärte in Gegenwart einer Verbindung, die mindestens einen Polyoxyalkylenrest und mindestens einen anionischen Rest im Molekül aufweist. Derartig hergestellt flexible PU-Schaumstoffe finden im breiten Umfange Verwendung in der Polstermöbel- und Automobilindustrie. Die Publikation enthält jedoch keinerlei Hinweise bezüglich der Herstellung anderer PU-Schaumstoffe.

Die Aufgabe der vorliegenden Erfindung bestand darin, die Produktionsschwankungen bei der Herstellung von mit Wasser aufgeschäumten PU-Hartschaumstoffen, vorzugsweise PU-Halbhartschaumstoffen zu beseitigen oder zumindest weitgehend zu vermindern. Ohne Einschränkung der Produktionssicherheit sollten der PU-Schaumstoffherstellung die aus der FCKW Verschäumung bekannten und bewährten höhermolekularen Polyhydroxylverbindungen, insbesondere Polyoxyalkylen-polyole, zugänglich sein. Bei der Hinterschäumung von Folien zur Bildung von Verbundelementen, wie z.B. Armaturenbretter für die Automobilindustrie, sollte die Lunkerbildung auf ein Mindestmaß reduziert und dadurch die Ausschußrate und die Produktionskosten gesenkt werden. Die Wasserverträglichkeit und damit der Wassergehalt der A-Komponente sollte erhöht werden können, ohne daß ihre Lagerbeständigkeit und physikalischen Eigenschaften nachteilig beeinflußt werden bzw. ihre Verarbeitbarkeit erschwert wird.

Diese Aufgabe konnte überraschenderweise gelöst werden durch die Verwendung von Wasser oder Mischungen aus Wasser und physikalisch wirkenden Treibmitteln als Treibmittel in Verbindung mit mindestens einem der speziell ausgewählten nachfolgend genannten Zusatzstoffe (f1) bis (f4).

Gegenstand der Erfindung ist somit ein Verfahren zur Herstellung von Polyurethan-Hartschaumstoffen, vorzugsweise Polyurethan-Halbhartschaumstoffen durch Umsetzung von
a) organischen und/oder modifizierten organischen Polyisocyanaten mit
b) höhermolekularen Polyhydroxylverbindungen und gegebenenfalls
c) niedermolekularen Kettenverlängerungs- und/oder Vernetzungsmitteln
in Gegenwart von
d) Treibmitteln,
e) gegebenenfalls Katalysatoren,
f) Zusatzstoffen und
g) gegebenenfalls Hilfsmitteln
das dadurch gekennzeichnet ist, daß als Treibmittel (d) Wasser verwendet wird und der Zusatzstoff (f), ausgewählt wird aus mindestens einer Verbindung der Formeln (f1) bis (f4) 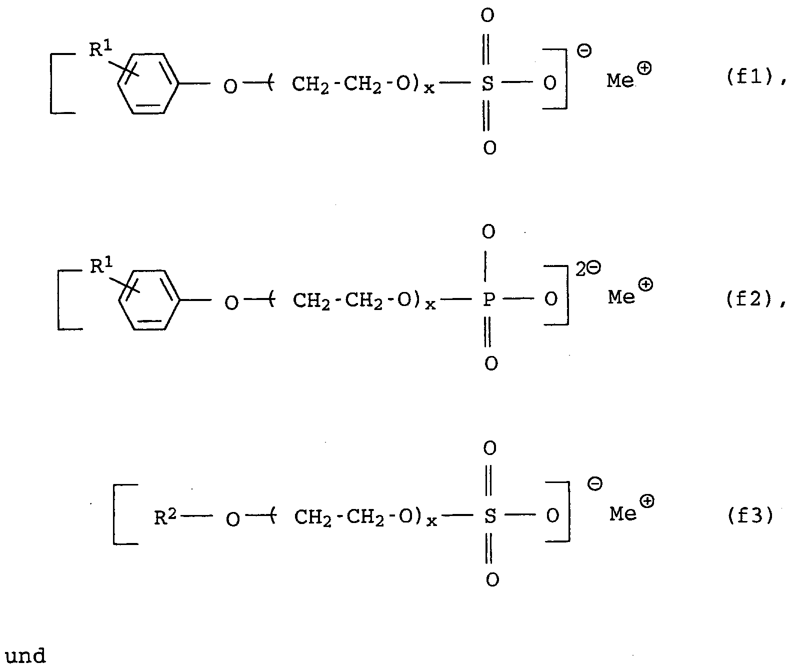 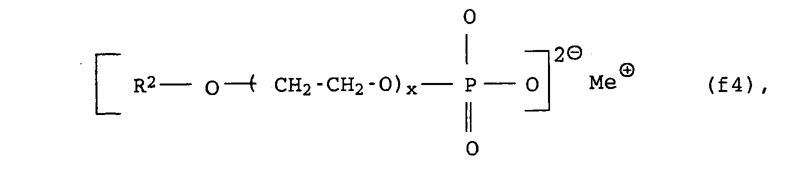 in denen bedeuten
- R¹ und R²: lineare oder verzweigte Alkylreste mit 1 bis 32 C-Atomen,
- X: eine ganze Zahl von 1 bis 35 und
- Me: Natrium, Kalium, Ammonium, Calcium und Magnesium mit der Maßgabe, daß die Anzahl der Kationen und Anionen äquivalent ist.

Gegenstand der Erfindung sind ferner Verbundelemente, die bestehen aus
A) mindestens einer Deckschicht, die ihrerseits vorzugsweise aus einem Werkstoff ausgewählt aus der Gruppe Polyvinylchlorid, polyvinylchloridhaltigen Polymerisatgemischen, thermoplastischen Polyurethanen, Polyacrylaten und thermoplastischen Formmassen aus Acrylatpfropfcopolymerisaten und Homo- und/oder Copolymerisaten aus olefinisch ungestättigten Monomeren besteht,
und
B) mindestens einer Schicht aus einem Polyurethan-Hartschaumstoff oder vorzugsweise Polyurethan-Halbhartschaumstoff, der hergestellt wird durch Umsetzung von
   a) organisch und/oder modifizierten organischen Polyisocyanaten mit
   b) höhermolekularen Polyhydroxylverbindungen und gegebenenfalls
   c) niedermolekularen Kettenverlängerungs- und/oder Vernetzungsmitteln
   in Gegenwart von
   d) Wasser oder Mischungen aus Wasser und physikalisch wirkenden Treibmittel als Treibmittel (d),
   e) gegebenenfalls Katalysatoren,
   f) einem Zusatzstoff (f), ausgewählt aus mindestens einer Verbindung mit einer der vorgenannten Formeln (f1) bis (f4) sowie gegebenenfalls zusätzlichen anderen Zusatzstoffen und
   g) gegebenenfalls Hilfsmitteln.

Durch den Einsatz der erfindungsgemäß geeigneten Zusatzstoffe (f1) bis (f4) kann der Wassergehalt in der A-Komponente beträchtlich erhöht werden, z.B. auf Wassergehalte bis 6 Gew.-%, bezogen auf die höhermolekularen Polyhydroxylverbindungen (b), ohne daß die A-Komponente inhomogen oder trübe wird, ihre Lagerbeständigkeit reduziert oder ihre Viskosität verändert wird. Schwankungen in der Produktion der PU-Schaumstoffe oder Verbundelemente, verbunden mit einer Veränderung, beispielsweise Verschlechterung, der mechanischen Eigenschaften konnten beträchtlich reduziert werden. Die Palette der verwendbaren Aufbaukomponenten, insbesondere Polyhydroxylverbindungen (b) konnte verbreitert und der Verarbeitungsspielraum der schaumfähigen PU-Reaktionsmischungen erweitert werden, so daß die Anpassung der PU-Systeme an örtliche Schaumvorrichtungen praktisch vollständig entbehrlich wurde. Deutlich reduziert werden könnte auch die Lunkerbildung, so daß die PU-Hart- und Halbhartschaumstoffe eine einheitliche Zellstruktur und ein gleichmäßig hohes mechanisches Eigenschaftsniveau besitzen.

Zu dem erfindungsgemäßen Verfahren zur Herstellung der PU-Hartschaumstoffe, vorzugsweise PU-Halbhartschaumstoffe und den Verbundelementen, hergestellt unter Verwendung derartiger PU-Schaumstoffe sowie den hierfür verwendbaren Ausgangsstoffe, ist im einzelnen folgendes auszuführen:
a) Zur Herstellung der PU-Hartschaumstoffe, vorzugsweise PU-Halbhartschaumstoffe, eignen sich die an sich bekannten organischen, z.B. aliphatischen, cycloaliphatischen und vorzugsweise aromatischen Di- und/oder Polyisocyanate (a). Im einzelnen seien als aromatische Polyisocyanate beispielhaft genannt: Mischungen aus 4,4'- und 2,4'-Diphenylmethan-diisocyanat (MDI), Mischungen aus MDI und Polyphenyl-polymethylenpolyisocyanaten (Roh-MDI) mit einem Gehalt an MDI-Isomeren von zweckmäßigerweise mindestens 35 Gew.-%, vorzugsweise von 50 bis 90 Gew.-% und mehr, bezogen auf das Gesamtgewicht der Mischung, 2,4- und 2,6-Toluylen-diisocyanat (TDI) sowie die entsprechenden handelsüblichen Isomerenmischungen, Mischungen aus TDI und MDI und/oder Roh-MDI, beispielsweise solchen mit einem MDI-Gehalt von 30 bis 90 Gew.-%, vorzugsweise 40 bis 80 Gew.-%, bezogen auf das Gesamtgewicht des Roh-MDI's.
   Als organische Polyisocyanate (a) geeignet sind auch sogenannte modifizierte mehrwertige organische Isocyanate, d.h. Produkte, die durch partielle chemische Umsetzung organischer Di- und/oder Polyisocyanate erhalten werden. Beispielhaft genannt seien Ester-, Harnstoff-, Biuret-, Allophanat-, Isocyanurat- und vorzugsweise Carbodiimid-, Uretonimin- und/oder Urethangruppen enthaltende Di- und/oder Polyisocyanate. Im einzelnen kommen beispielsweise in Betracht: Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 35 bis 14 Gew.-%, vorzugsweise von 34 bis 22 Gew.-%, wobei mit Urethangruppen modifizierte Polyisocyanate aus TDI, insbesondere einen NCO-Gehalt von 34 bis 28 Gew.-% und solche aus 4,4'-MDI, 4,4'- und 2,4'-MDI-Isomerenmischungen oder Roh-MDI, insbesondere einen NCO-Gehalt von 28 bis 22 Gew.-%, bezogen auf das Gesamtgewicht, aufweisen und hergestellt werden durch Umsetzung von Diolen, Oxalkylen-glykolen und/oder Polyoxyalkylen-glykolen mit Molekulargewichten von 62 bis 6 000, vorzugsweise von 134 bis 4 200 mit TDI, 4,4'-MDI, MDI-Isomerengemischen und/oder Roh-MDI z.B. bei Temperaturen von 20 bis 110°C, vorzugsweise von 50 bis 90°C, wobei als Oxalkylen- und Polyoxyalkylen-glykole, die einzeln oder als Gemisch eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Isocyanuratgruppen enthaltende Polyisocyanate, z.B. auf MDI-Isomeren- und/oder TDI-Basis.
   Besonders bewährt haben sich jedoch und daher vorzugsweise Anwendung finden Mischungen aus 4,4'- und 2,4'-MDI, Roh-MDI mit einem Gehalt an MDI von mindestens 35 Gew.-%, bezogen auf das Gesamtgewicht, Mischungen aus 4,4'- und 2,4'-MDI und Gemischen aus 2,4- und 2,6-TDI, Mischungen aus Roh-MDI und Gemischen aus 2,4- und 2,6-TDI, Urethangruppen enthaltende Polyisocyanatmischungen mit einem NCO-Gehalt von 28 bis 14 Gew.-%, bezogen auf das Gesamtgewicht, auf der Grundlage von TDI und/oder MDI und/oder Roh-MDI.
b) Als höhermolekulare Polyhydroxylverbindungen werden zweckmäßigerweise solche mit einer Funktionalität von 2 bis 8, einer Hydroxyzahl von 14 bis 500 und darüber und einem Alkaliionengehalt von kleiner als 10 ppm, vorzugsweise kleiner als 5 ppm und insbesondere kleiner als 3 ppm verwendet, wobei die Polyhydroxylverbindungen zur Herstellung der PU-Halbhartschaumstoffe eine Funktionalität von vorzugsweise 2 bis 4 und insbesondere 2 bis 3 und eine Hydroxylzahl von vorzugsweise 14 bis 280 und insbesondere 24 bis 200 besitzen und Polyhydroxylverbindungen zur Herstellung von PU-Hartschaumstoffen eine Funktionalität von vorzugsweise 3 bis 8, insbesondere 3 bis 6 und eine Hydroxylzahl von größer als 280 bis 500 insbesondere von 320 bis 480 aufweisen. Geeignet sind auch Mischungen aus Polyhydroxylverbindungen mit Hydroxylzahlen größer als 500, wobei diese jedoch zweckmäßigerweise eine durchschnittliche Hydroxylzahl (Zahlenmittelwert) in den vorgenannten Bereichen besitzen.
   Als höhermolekulare Polyhydroxylverbindungen bewährt haben sich beispielsweise Polyoxyalkylen-polyole, Polyester-polyole, vorteilhafterweise solche hergestellt aus Alkandicarbonsäuren und mehrwertigen Alkoholen, Polythioether-polyole, Polyesteramide, hydroxylgruppenhaltrige Polyacetale, hydroxylgruppenhaltige, vorzugsweise aliphatische Polycarbonate oder Mischungen aus mindestens zwei der genannten Polyhydroxylverbindungen. Vorzugsweise Anwendung finden Polyester-polyole und/oder insbesondere Polyoxyalkylen-polyole. Zur Abtrennung leichter siedender Nebenprodukte können die Polyhydroxylverbindungen nach ihrer Herstellung einer Behandlung bei erhöhter Temperatur unter vermindertem Druck unterworfen werden. Beispielhaft genannt sei die Destillation unter vermindertem Druck mit Hilfe eines Dünnschichtverdampfers.
   Geeignete Polyoxyalkylen-polyole können nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 8 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.
   Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure und vorzugsweise mehrwertige, insbesondere zwei- bis sechswertige Alkohole oder Dialkylenglykole, wie z.B. Ethandiol, Propandiol-1,2 und -1,3, Diethylenglykol, Dipropylenglykol, Butandiol-1,4, Pentandiol-1,5, Hexandiol-1,6, Glycerin, Trimethylol-propan, Pentaerythrit, Sorbit und Sucrose.
   Die Polyoxyalkylen-polyole, vorzugsweise Polyoxypropylen- und Polyoxypropylen-polyoxyethylen-polyole besitzen zur Herstellung der PU-Halbhartschaumstoffe zweckmäßigerweise eine Funktionalität von vorzugsweise 2 bis 4 und insbesondere von 2 bis 3 und Hydroxylzahlen insbesondere von 14 bis 200, insbesondere bevorzugt von 24 bis 160 und geeignete Polyoxytetramethylenglykole, üblicherweise eine Hydroxylzahl von 37 bis 180.
   Als Polyhydroxylverbindungen (b) bzw. Polyoxyalkylen-polyole vorzüglich bewährt haben sich auch Polyoxyalkylen-polyole (b1) oder -gemische mit einer Funktionalität von 2 bis 4, vorzugsweise 2 bis 3 und einer Hydroxylzahl von 14 bis 160 und vorzugsweise von 18 bis 80, die hergestellt werden durch Polyaddition von Ethylenoxid, 1,2-Propylenoxid oder Mischungen aus Ethylenoxid mit 1,2-Propylenoxid an mindestens ein Startermolekül der Formel 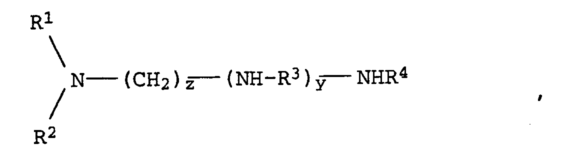 in der bedeuten
   - R¹ und R²: gleiche oder verschiedene, lineare oder verzweigte C₁- bis C₄-Alkylreste,
   beide Reste gemeinsam einen C₄- bis C₆-Cycloalkylenrest,
   der anstelle einer Methylengruppe ein -O- oder -NR⁵-Brückenglied enthalten kann, in dem R⁵ ein C₁- bis C₄-Alkylrest ist, oder
   gleiche oder verschiedene Dialkylaminoalkylreste der Formel 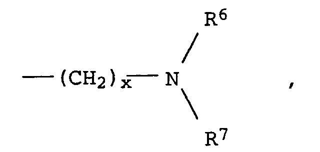 in der R⁶ und R⁷ gleiche oder verschiedene, lineare oder verzweigte C₁- bis C₄-Alkylreste oder beide Reste gemeinsam ein C₄- bis C₆-Cycloalkylenrest sind, der anstelle einer Methylengruppe ein -O- oder -NR⁵- Brückenglied gebunden enthalten kann und X eine ganze Zahl von mindestens 3 ist,
   - z: eine ganze Zahl von mindestens 3,
   - R³: eine C₂- bis C₄-Alkylengruppe,
   - y: null oder eine Zahl von 1 bis 3 und
   - R⁴: Wasserstoff oder einen C₁- bis C₄-Alkylrest mit der Maßgabe, daß für y gleich null R⁴ Wasserstoff ist.

   Vorzüglich geeignete Polyoxyalkylen-polyole (b1) mit einer Funktionalität von 2 bis 3 und einer Hydroxylzahl von 14 bis 160, vorzugsweise von 18 bis 80 können z.B. hergestellt werden durch Polyaddition mindestens eines Alkylenoxids, vorzugsweise von Ethylenoxid, 1,2-Propylenoxid oder Mischungen aus Ethylenoxid und 1,2-Propylenoxid, an ein Startermolekül aus der Gruppe N,N-Dimethyl-diaminopropan-1,3, N,N-Dimethyldiaminobutan-1,4 und insbesondere N,N-Dimethyl-dipropylentriamin. Derartige hochreaktive Polyoxyalkylen-polyole (b1), bei denen die tertiäre Aminogruppe über eine Spacerbrücke aus mindestens 3 Methylenresten an die mit Alkylenoxid reagierenden -NH- und/oder -NH₂-Gruppen gebunden ist, werden beschrieben in der EP-A-0 539 819, deren gesamte Offenbarung als Bestandteil der Erfindungsbeschreibung zu betrachten ist.
   Als Polyhydroxylverbindungen (b) bzw. Polyoxyalkylen-polyole vorzüglich bewahrt haben sich ferner Blockpolyoxypropylenpolyoxyethylen-polyole (b2) oder -gemische mit einer Hydroxylzahl von 14 bis 65, vorzugsweise von 14 bis 40 und insbesondere von 20 bis 35 und einem Gehalt an endständig gebundenen Ethylenoxideinheiten von 2 bis 9 Gew.-%, vorzugsweise 3 bis 8 Gew.-% und insbesondere 5 bis 7 Gew.-%, bezogen auf das Gewicht der Polyoxypropyleneinheiten, die hergestellt werden durch anionische Polymerisation bei erhöhten Temperaturen von 1,2-Propylenoxid an eine Startermolekülmischung mit einer durchschnittlichen Funktionalität von 2,3 bis 2,8, vorzugsweise von 2,3 bis 2,7 und insbesondere von 2,5 bis 2,7, die besteht aus Wasser und Glycerin und/oder Trimethylolpropan und Polymerisation von Ethylenoxid an das erhaltene Polyoxypropylenaddukt. Blockpolyoxypropylen-polyoxyethylenpolyole (b2) der genannten Art sind bekannt aus den EP-A-433 878 und EP-A-433 889, deren Gesamtbeschreibungen als Bestandteil der Erfindungsbeschreibung zu betrachten sind.
   Als Polyoxyalkylen-polyole eignen sich ferner polymermodifizierte Polyoxyalkylen-polyole (b3), vorzugsweise Pfropfpolyoxyalkylen-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90:10 bis 10:90, vorzugsweise 70:30 bis 30:70, in zweckmäßigerweise den vorgenannten Polyoxyalkylen-polyolen analog den Angaben der deutschen Patentschriften 11 11 934, 12 22 669 (US 3 304 273, 3 383 351, 3 523 093), 11 52 536 (GB 10 40 452) und 11 52 537 (GB 987 618) hergestellt werden, sowie Polyoxyalkylen-polyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011 752 (US 4 304 708), US-A-4 374 209 und DE-A-32 31 497.
   Die Polyoxyalkylen-polyole können einzeln oder in Form von Mischungen verwendet werden. Als Polyhydroxylverbindungen vorzüglich bewährt haben sich Mischungen, die die Polyoxyalkylen-polyole (b1) und (b2) enthalten, wobei diese zweckmäßigerweise, bezogen auf das Gesamtgewicht, in einer Menge von 2 bis 50 Gew.-%, vorzugsweise 8 bis 48 Gew.-% (b1) und 10 bis 50 Gew.-%, vorzugsweise 20 bis 48 Gew.-% (b2) in der Mischung enthalten sind.
   Als Polyhydroxylverbindungen (b) verwendet werden können ferner Polyester-polyole, die beispielsweise aus Alkandicarbonsäuren mit 2 bis 12 Kohlenstoffatomen, vorzugsweise Alkandicarbonsäuren mit 4 bis 6 Kohlenstoffatomen oder Mischungen aus Alkandicarbonsäuren und/oder aromatischen Polycarbonsäuren und mehrwertigen Alkoholen, vorzugsweise Alkandiolen, mit 2 bis 12 Kohlenstoffatomen, vorzugsweise 2 bis 6 Kohlenstoffatomen und/oder Dialkylenglykolen hergestellt werden können. Als Alkandicarbonsäuren kommen beispielsweise in Betracht: Bernsteinsäure, Glutarsäure, Adipinsäure, Korksäure, Azelainsäure, Sebacinsäure und Decandicarbonsäure. Geeignete aromatische Polycarbonsäuren sind z.B. Phthalsäure, Isophthalsäure und Terephthalsäure. Die Alkandicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono-oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und mehrwertige Alkohole, insbesondere Alkandiole oder Dialkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.
   Zur Herstellung der Polyester-polyole können die Mischungen aus aromatischen und aliphatischen Dicarbonsäuren und vorzugsweise Alkandicarbonsäuren und/oder -derivaten und mehrwertigen Alkoholen katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.
   Die erhaltenen Polyester-polyole besitzen vorzugsweise eine Funktionalität von 2 bis 4, insbesondere 2 bis 3 und eine Hydroxylzahl von 25 bis 200, vorzugsweise 32 bis 140 und insbesondere 40 bis 94.
   Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen z.B. solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
c) Zur Herstellung der PU-Hart- und vorzugsweise Halbhartschaumstoffe nach dem erfindungsgemäßen Verfahren können zusätzlich zu den höhermolekularen Polyhydroxylverbindungen (b) gegebenenfalls auch niedermolekulare difunktionelle Kettenverlängerungsmittel, niedermolekulare tri- oder höherfunktionelle, vorzugsweise tri- oder tetrafunktionelle Vernetzungsmittel oder Mischungen aus Kettenverlängerungs- und Vernetzungsmittel verwendet werden.
   Als derartige Kettenverlängerungs- und Vernetzungsmittel (c) eignen sich z.B. Diole, wie z.B. (Cyclo)alkandiole und Dialkylenglykole und/oder höherwertige Alkohole, vorzugsweise Triole und Quadrole, mit Molekulargewichten kleiner als 400, vorzugsweise von 60 bis 300. In Betracht kommen beispielsweise aliphatische, cycloaliphatische und/oder araliphatische Diole mit 2 bis 14 Kohlenstoffatomen,vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon und Triole, wie 1,2,4-, 1,3,5-Trihydroxy-cyclohexan, Glycerin und Trimethylolpropan. Als Kettenverlängerungs- und Vernetzungsmittel geeignet sind ferner niedermolekulare hydroxylgruppenhaltige Polyalkylenoxide mit Molekulargewichten bis 400 auf Basis von Ethylen- und/oder 1,2-Propylenoxid und den beispielhaft genannten Diolen und/oder Triolen und/oder Pentaerythrit, Sorbit und Saccharose als Startermoleküle.
   Die handelsüblichen höhermolekularen Polyhydroxylverbindungen (b) und gegebenenfalls niedermolekularen Kettenverlängerungs- und/oder Vernetzungsmittel besitzen üblicherweise einen Gehalt an Alkaliionen von kleiner als 10 ppm. Beim erfindungsgemäßen Verfahren haben sich als Vernetzungsmittel (c), insbesondere zur Herstellung der PU-Halbhartschaumstoffe, auch Polyoxyalkylen-polyole bewährt mit einer Funktionalität von 3 bis 8, vorzugsweise 3 bis 6 und insbesondere 3, einer Hydroxylzahl von 210 bis 1300, vorzugsweise 240 bis 970 und insbesondere 350 bis 750 und einem Gehalt an Alkaliionen, vorzugsweise Kaliumionen von 150 bis 1200 ppm, vorzugsweise 150 bis 800 ppm und insbesondere von 400 bis 600 ppm. Die Verwendung von alkalireichen Vernetzungsmittel dieser Art zur Herstellung von vorzugsweise PU-Halbhartschaumstoffen ist bekannt und wird z.B. in der EP-A-0 624 611 (CA-A-2 122 973) ausführlich beschrieben.
   Sofern Mischungen aus höhermolekularen Polyhydroxylverbindungen (b) und Kettenverlängerungs- und/oder Vernetzungsmitteln (c) Anwendung finden, z.B. zur Modifizierung der mechanischen Eigenschaften, beispielsweise der Härte, enthalten diese die Kettenverlängerungs- und/oder Vernetzungsmittel (c) zweckmäßigerweise in einer Menge von 0,5 bis 20 Gew.-%, vorzugsweise von 1 bis 15 Gew.-% und insbesondere 2 bis 8 Gew.-%.
d. Zur Herstellung der PU-Hart- und vorzugsweise PU-Halbhartschaumstoffe wird als Treibmittel (d) erfindungsgemäß Wasser verwendet, das mit Isocyanatgruppen unter Bildung von Amingruppen und Kohlendioxid, dem wirklichen Treibgas, reagiert. Die Wassermengen, die zweckmäßigerweise eingesetzt werden, betragen 0,1 bis 5 Gew.-Teile, vorzugsweise 1,5 bis 3,5 Gew.-Teile und insbesondere 2,0 bis 3,0 Gew.-Teile, bezogen auf 100 Gew.-Teile der Polyhydroxylverbindungen (b) bzw. Mischungen aus höhermolekularen Polyhydroxylverbindungen (b) und Kettenverlängerungs- und/oder Vernetzungsmittel (c).
   Hierbei hat es sich als vorteilhaft erwiesen, die Zusatzstoffe (f1), (f2), (f3) und/oder (f4) in Wasser als Treibmittel (d) zu lösen und diese erfindungswesentlichen Aufbaukomponenten in Form einer wäßrigen Lösung zu verwendet.
   Im Gemisch mit Wasser können als Treibmittel (d) auch physikalisch wirkende Treibmittel eingesetzt werden. Geeignet sind Flüssigkeiten, welche gegenüber den organischen, gegebenenfalls modifizierten Polyisocyanaten (a) inert sind und Siedepunkte unter 100°C, vorzugsweise unter 50°C, insbesondere zwischen -50°C und 3o°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Kohlenwasserstoffe, wie z.B. n- und iso-Pentan, vorzugsweise technische Gemische aus n- und iso-Pentanen, n- und iso-Butan, n- und iso-Propan, Cycloalkane, wie z.B. Cyclohexan und Cyclopentan, Ether, wie z.B. Furan, Dimethylether und Diethylether, Ketone, wie z.B. Aceton und Methylethylketon, Carbonsäurealkylester, wie z.B. Methylformiat, Dimethyloxalat und Ethylacetat und halogenierte Kohlenwasserstoffe, wie z.B. Methylenchlorid, Dichlormonofluormethan, Difluormethan, Difluorchlormethan, Trifluormethan, Difluorethan, Tetrafluorethan, Heptafluorpropan, 1-Chlor-2,2-difluorethan (142), 1-Chlor-1,1-difluorethan (142b) und 1-Chlor-1,2-difluorethan (142a). Auch Gemische dieser niedrigsiedenden Flüssigkeiten untereinander z.B. aus Difluorchlormethan und 142b und/oder mit anderen substituierten oder unsubstituierten Kohlenwasserstoffen können verwendet werden.
   Die zusätzlich zu Wasser erforderliche Menge an physikalisch wirkenden Treibmitteln kann in Abhängigkeit von der gewünschten Schaumstoffdichte auf einfache Weise ermittelt werden und beträgt ungefähr 0 bis 25 Gew.-Teile, vorzugsweise 1 bis 25 Gew.-Teile, insbesondere 2 bis 15 Gew.-Teile pro 100 Gew.-Teile der Polyhydroxylverbindungen (b). Gegebenenfalls kann es zweckmäßig sein, die gegebenenfalls modifizierten Polyisocyanate (a) mit dem inerten physikalisch wirkenden Treibmittel zu mischen und dadurch die Viskosität zu verringern.
   Die PU-Hart- und vorzugsweise PU-Halbhart-Schaumstoffe können nach dem erfindungsgemäßen Verfahren in Abwesenheit von Katalysatoren hergestellt werden. Zweckmäßigerweise wird die Reaktion jedoch in Gegenwart von Katalysatoren (e), die die Reaktion der organischen und/oder organischen modifizierten Polyisocyanate (a) mit den Polyhydroxylverbindungen (b) und Vernetzungsmitteln (c) stark beschleunigen, durchgeführt. Als Katalysatoren in Betracht kommen z.B. fogging-arme Treibkatalysatoren. Als Katalysatoren geeignet sind beispielsweise ferner Alkalimetallsalze von Monocarbonsäuren mit linearen oder verzweigten Alkylresten mit 1 bis 20 C-Atomen, vorzugsweise 1 bis 18 C-Atomen und/oder Dicarbonsäuren mit linearen oder verzweigten Alkylresten mit 2 bis 20 C-Atomen, vorzugsweise 2 bis 12 C-Atomen, wie z.B. Kaliumformiat, Kaliumacetat, Kaliumoctoat, Kaliummaleinat und Dikaliumadipat und organische Metallverbindungen, vorzugsweise organische Zinnverbindungen, wie z.B. Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn-(IV)-salze von organischen Carbonsäuren, z.B. Dibutyl-zinndiacetat, Dibutylzinn-dilaurat, Dibutylzinn-maleat und Dioctylzinndiacetat. Derartige Katalysatoren werden z.B. in der DE-A-3 048 529 beschrieben. Als gut geeignet erwiesen haben sich auch Dialkylzinn-(IV)-mercaptoverbindungen, wie z.B. Bislaurylzinn-(IV)-dimercaptid und Verbindungen der allgemeinen Formeln R₂Sn(SR'-O-CO-R'')₂ oder R₂Sn(SR'-CO-OR'')₂, in denen R einen Alkylrest mit mindestens 8 Kohlenstoffatomen, R' einen Alkylrest mit mindestens 2 Kohlenstoffatomen und R'' einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis(thioethylenglykollaurat), Dioctylzinn-bis(thiolatoessigsäure-2-ethylhexylester, Dioctylzinn-bis(thiolatoessigsäurehexylester) und Dioctylzinn-bis(thiolatoessigsäurelaurylester). Als Katalysatoren sehr gut bewährt haben sich ferner Organozinnverbindungen mit Zinn-Sauerstoff- oder Zinn-Schwefel-Bindungen, wie sie beispielsweise in der DD-A-244 535 beschrieben werden, der allgemeinen Formeln (R₃Sn)₂O, R₂SnS, (R₃Sn)₂S, R₂Sn(SR')₂, oder RSn(SR')₃, in denen R und R' Alkylgruppen darstellen, die 4 bis 8 Kohlenstoffatome bei R sowie 4 bis 12 Kohlenstoffatome bei R' enthalten und R' außerdem die Reste -R''COOR'' und -R''OCOR''' bedeuten kann, in denen R''' Alkylengruppen mit 4 bis 12 Kohlenstoffatomen sind. Als Beispiele hierfür seinen genannt: Bis(tributylzinn)oxid, Dibutylzinnsulfid, Dioctylzinnsulfid, Bis(tributylzinn(sulfid, Dibutylzinn-Bis(thioglykolsäure-2-ethylhexylester), Dibutylzinn-bis(thioglykolsäure-2-ethylhexylester), Dioctylzinn-bis(thioglykolsäure-2-ethylhexylester), Dioctylzinn-bis(thioglykolsäure-2-ethylhexylester), Dioctylzinn-bis(thioethylenglykol-2-ethyl-hexoat) und Dibutylzinn-bis(thioethylenglykollaurat). Als Katalysatoren vorzugsweise verwendet werden Mono-n-octylzinn-(2-ethylhexyl-thioglykolat), Di-n-octylzinn-bis-(2-ethylhexylthioglykolat) und Dibutylzinn-dilaurat.
   Die organischen Metallverbindungen können als Katalysatoren einzeln oder in Form von Katalysatorkombinationen eingesetzt werden. Als äußerst vorteilhaft hat sich eine Kombination erwiesen die besteht aus 50 Gew.-% Mono-n-octylzinn-(2-ethylhexylthioglykolat) und 50 Gew.-% Di-n-octylzinn-bis(2-ethylhexylthioglykolat). Die Katalysatoren werden üblicherweise in einer Menge von 0,001 bis 0,2 Gew.-Teilen, vorzugsweise 0,005 bis 0,015 Gew.-Teilen pro 100 Gew.-Teile der Polyhydroxylverbindungen (b) verwendet.
f) Zur Herstellung der PU-Hart- und vorzugsweise PU-Halbhartschaumstoffe wird als erfindungswesentlicher Zusatzstoff (f) mindestens eine Verbindung verwendet, die ausgewählt wird aus Verbindungen der Formeln (f1) bis (f4) 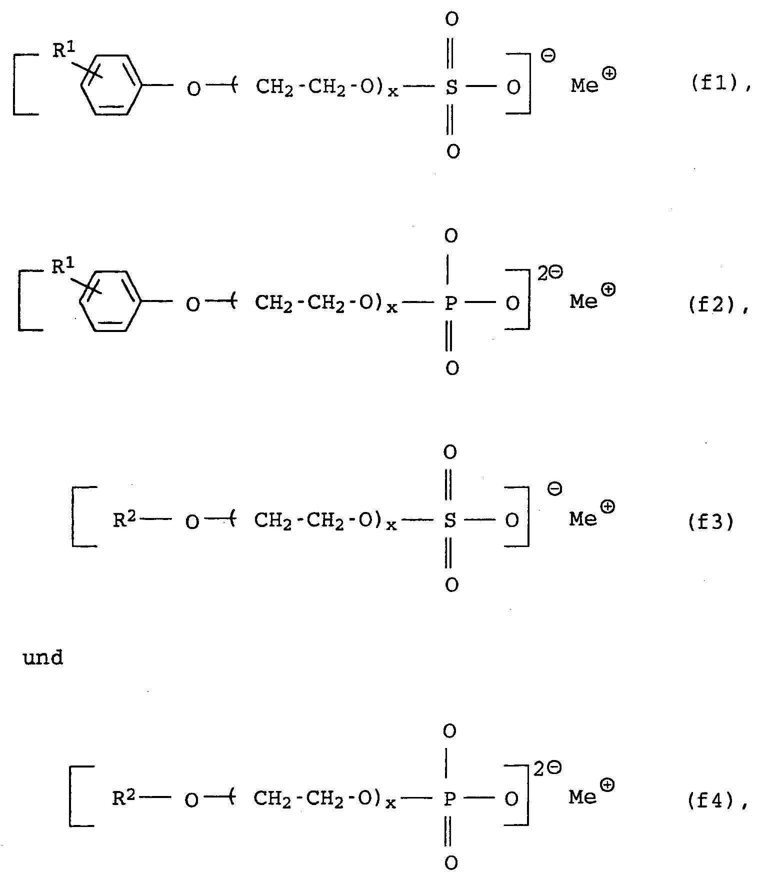 in denen bedeuten
   - R¹: einen linearen oder verzweigten Alkylrest mit 1 bis 32 C-Atomen, vorzugsweise 2 bis 18 C-Atomen und insbesondere 6 bis 18 C-Atomen,
   - R²: einen linearen oder verzweigten Alkylrest mit 1 bis 32 C-Atomen, vorzugsweise 4 bis 24 C-Atomen und insbesondere 8 bis 20 C-Atomen,
   - X: eine ganze Zahl von 1 bis 35, vorzugsweise 10 bis 30 und insbesondere 20 bis 30 und
   - Me: Natrium, Kalium, Ammonium, Calcium und Magnesium mit der Maßgabe, daß die Anzahl der Kationen und Anionen äquivalent ist.

   Beispiele geeigneter Verbindungen dieser Art sind 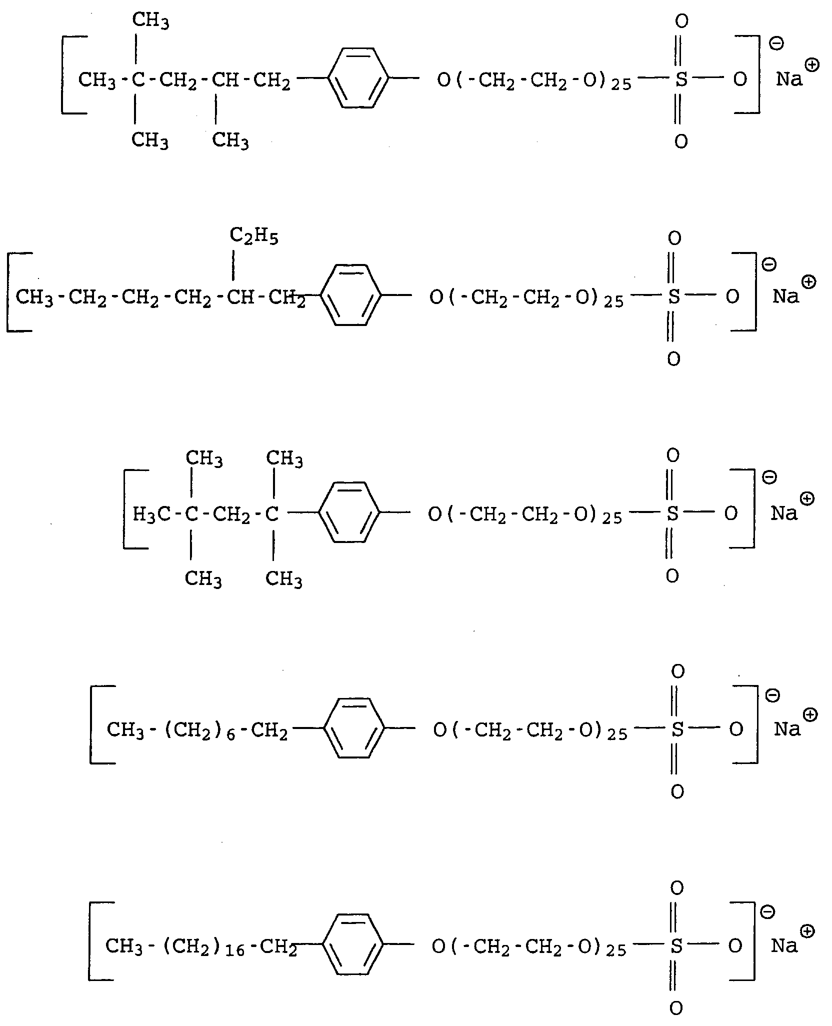 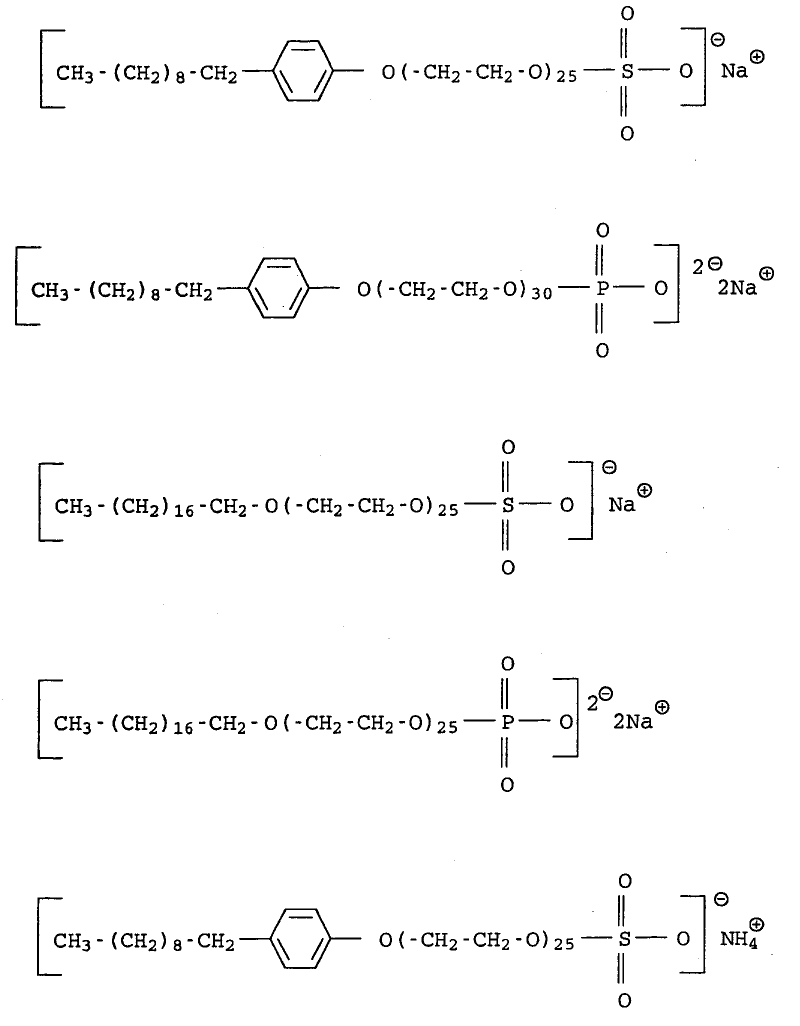
   Die Verbindungen können z.B. hergestellt werden nach bekannten Verfahren durch Anlagerung von Ethylenoxid an Alkohole oder Alkylphenole, Einführung der anionischen Gruppe, z.B. durch Umsetzung mit flüssigem Schwefeltrioxid und Neutralisation des Umsetzungsprodukts mit wässeriger Natronlauge.
   In Abhängigkeit von ihrer Wirksamkeit, die unter Berücksichtigung der anderen in der A-Komponente enthaltenen Aufbaukomponenten, insbesondere den höhermolekularen Polyhydroxylverbindungen, durch Handversuche leicht ermittelt werden kann und durch die Bildung einer homogenen A-Komponente erkennbar ist, hat es sich als vorteilhaft erwiesen, die Zusatzstoffe (f1), (f2), (f3) und (f4) oder Mischungen aus mindestens zwei dieser Zusatzstoffe (f1) bis (f4) üblicherweise in einer Menge von 0,01 bis 2,5 Gew.-%, vorzugsweise von 0,3 bis 1,4 Gew.-% und insbesondere von 0,4 bis 1,0 Gew.-% bezogen auf das Gewicht der höhermolekularen Polyhydroxylverbindungen (b) zu verwenden.
   Als geeigneter weiterer Zusatzstoff (f) bewährt haben sich anorganische Säuren, organische Säuren oder Mischungen aus anorganischen und organischen Säuren, die zweckmäßigerweise in Verbindung mit Polyoxyalkylen-polyolen (b1) als höhermolekulare Polyhydroxylverbindungen (b) und/oder mit Vernetzer (c) mit einem hohen Gehalt an Alkalionen verwendet werden. Als anorganische Säuren eignen sich beispielsweise Polyphosphorsäuren, ein- und mehrwertige Phosphorsäuren, vorzugsweise Triphosphorsäure und Salzsäure. Vorzugsweise Verwendung finden organische Säuren, insbesondere solche aus der Gruppe der Monocarbonsäuren, Polycarbonsäuren, vorzugsweise Dicarbonsäuren und aromatischen Sulfonsäuren. Als organische Säuren beispielhaft genannt seien Mono- und Dicarbonsäuren, wie z.B. Ameisensäure, Essigsäure, Propionsäure und vorzugsweise Ricinolsäure, Oxalsäure, Bernsteinsäure, Maleinsäure, Fumarsäure, Weinsäure, Zitronensäure, Adipinsäure, Benzoesäure, Phthalsäure, Terephthalsäure und Isophthalsäure, und Sulfonsäuren wie z.B. Benzolsulfonsäure und p-Toluolsulfonsäure. Die anorganischen und/oder organischen Säuren werden in Abhängigkeit von ihrem pKs-Wert und Molekulargewicht sowie der Basizität der Polyhydroxylverbindungen (b) üblicherweise in einer Menge von 0,1 bis 20 Gew.-Teilen, bezogen auf 100 Gew.-Teile Polyhydroxylverbindung (b) verwendet, wobei die exakten Gewichtsmengen durch einfache Handversuche ermittelt werden können.
   Bei Verwendung von mindestens einem Polyoxyalkylen-polyol (b1) als Polyhydroxylverbindung (b) hat es sich als vorteilhaft erwiesen, die anorganischen und/oder organischen Säuren in einer separaten Reaktionsstufe in das Polyoxyalkylen-polyol (b1) einzubringen und die erhaltene Mischung der A-Komponente einzuverleiben.
   Als organische Säuren insbesondere bewährt haben sich langkettige Fettsäuren wie z.B. Ricinolsäure und Hydroxyfettsäuren, z.B. Hydroxystearinsäuren, die aus natürlichen Ölen gewonnen werden können, und durch Epoxidierung der ungesättigten Doppelbindungen und Addition von ein- und/oder mehrwertigen Alkoholen an die Epoxidgruppe zu Hydroxyfettsäuren umgesetzt werden können. Derartige hydroxylgruppenhaltige organische Säuren haben sich insbesondere in Kombination mit Vernetzern (c) mit einem hohen Gehalt an Alkaliionen bewährt, da diese Kombination eine hervorragende Emulgierwirkung aufweist und PU-Schaumstoffe mit äußerst homogener Schaumstruktru gibt. Bei Verwendung eines Vernetzers (c) mit einem Alkaliionengehalt von kleiner als 10 ppm wird in Verbindung mit den organischen Säuren die Startzeit der Reaktionsmischung verlängert.
g) Der Reaktionsmischung zur Herstellung der PU-Hartschaumstoffe, vorzugsweise PU-Halbhartschaumstoffe, können gegebenenfalls zusätzlich Hilfsmittel (g) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, funistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxyalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen-und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindungen (b) und Vernetzungsmittel (c) angewandt.
   Als Füllstoffe, insbesondere verstärkend wirkende Füllstoffe, sind die an sich bekannten, üblichen organischen und anorganischen Füllstoffe und Verstärkungsmittel, zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Zeolithe, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.
   Geeignete Flammschutzmittel sind beispielsweise Trikresylphosphat, Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylendiphosphat.
   Außer den bereits genannten halogensubstituierten Phosphaten können auch anorganische Flammschutzmittel, wie roter Phosphor, Aluminiumoxidhydrat, Antimontrioxid, Ammoniumsulfat, Ammoniumpolyphosphat und Calciumsulfat, Blähgraphit, Harnstoff oder Cyanursäurederivate, wie z.B. Melamin, Melamincyanurat oder Mischungen aus mindestens zwei Flammschutzmitteln, wie z.B. Ammoniumpolyphosphaten und Melamin sowie gegebenenfalls Blähgraphit und/oder Stärke zum Flammfestmachen der erfindungsgemäß hergestellten PU-Schaumstoffe, verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.
   Als Hilfsmittel (g) verwendet werden können ferner Antioxidantien, beispielsweise nicht flüchtige Kryptophenole, wie z.B. Irganox® 1135 der Ciba-Geigy AG oder sterisch gehinderte Amine, wie z.B. Naugard® 445 der Firma Uniroyal. Zusätzlich zu diesen Antioxidantien können in vorteilhafterweise noch UV-Stabilisatoren oder UV-Stabilisatorkombinationen eingesetzt werden.
   Nähere Angaben über die oben genannten anderen üblichen Hilfsmittel sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe, vorzugsweise der PU-Halbhartschaumstoffe, werden die organischen, gegebenenfalls modifizierten Polyisocyanate (a), die Polyhydroxylverbindungen (b) und Vernetzungsmittel (c) in Gegenwart der Treibmittel (d), gegebenenfalls Katalysatoren (e) und Zusatzstoffe (f) sowie gegebenenfalls Hilfsmittel (g) üblicherweise bei Temperaturen von 0 bis 120°C, vorzugsweise 15 bis 100°C und insbesondere 18 bis 80°C in solchen Mengen zur Reaktion gebracht, daß pro NCO-Gruppe vorteilhafterweise 0,5 bis 2, vorzugsweise 0,8 bis 1,3 und insbesondere ungefähr eine Hydroxylgruppe gebunden an (b) und (c) vorliegen. Bei ausschließlicher oder teilweiser Anwendung von Wasser als Treibmittel hat es sich als zweckmäßig erwiesen, ein Verhältnis von Äquivalente Wasser zu Äquivalente NCO-Gruppe im Bereich von vorteilhafterweise 0,5 bis 5:1, vorzugsweise 0,7 bis 0,95:1 und insbesondere 0,75 bis 0,85:1 einzustellen. Zur Herstellung von PU-Hartschaumstoffen mit Isocyanuratgruppen hat sich z.B. ein Verhältnis von NCO-:OH-Gruppen von 2 bis 25:1, vorzugsweise 2 bis 10:1 und insbesondere 2 bis 5:1 bewährt.

Die PU-Schaumstoffe, vorzugsweise die PU-Halbhartschaumstoffe, werden zweckmäßigerweise nach dem one shot-Verfahren durch Vermischen von zwei Komponenten A und B hergestellt, wobei üblicherweise die Ausgangskomponenten (b) bis (d) und (f) sowie gegebenenfalls (e) und (g) zu der sogenannten A-Komponente vereinigt und als B-Komponente die organischen und/oder modifizierten organischen Polyisocyanate (a) gegebenenfalls im Gemisch mit inerten, physikalisch wirkenden Treibmitteln verwendet werden. Die A- und B-Komponenten müssen vor Herstellung der PU-Schaumstoffe nur noch intensiv gemischt werden. Die Reaktionsmischung kann in offenen oder geschlossenen Formwerkzeugen verschäumt und aushärten gelassen werden. Ferner können vorgefertigte Bezugsmaterialien zu Formteilen hinterschäumt und Verbundelemente herstellt werden.

Das erfindungsgemäße Verfahren eignet sich insbesondere auch zur Herstellung von PU-Formschaumstoffen. Die Reaktionsmischung wird hierzu mit einer Temperatur von 15 bis 80°C, vorzugsweise 30 bis 65°C in ein zweckmäßiger3weise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man üblicherweise drucklos oder unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die nach dem erfindungsgemäßen Verfahren hergestellten PU-Schaumstoffe besitzen üblicherweise Dichten von 0,025 bis 0,25 g/cm³, vorzugsweise von 0,035 bis 0,08 g/cm³, wobei die Formschaumstoffe, beispielsweise solche mit einem zelligen Kern und einer verdichteten Randzone in Abhängigkeit vom angewandten Verdichtungsgrad auch Dichten von 0,08 bis 0,75 g/cm³, vorzugsweise von 0,2 bis 0,6 g/cm³ aufweisen können. Die nach dem erfindungsgemäßen Verfahren hergestellten PU-Schaumstoffe sind, wie bereits ausgeführt wurde, im wesentlichen geruchlos, zeigen eine gleichmäßige, im wesentlichen lunkerfreie Zellstruktur und besitzen ein gleichmäßig hohes mechanisches Eigenschaftsniveau.

Die Reaktionsmischungen zur Herstellung der PU-Schaumstoffe finden z.B. Verwendung in der Fahrzeug-, beispielsweise Automobil-, Flugzeug- und Schiffsbauindustrie, der Kühlmöbel- und Bauindustrie zum Ausschäumen und Hinterschäumen von Hohlräumen, z.B. von Armaturen- und Schalttafeln, als Zwischenschicht für Sandwichelemente oder zum Ausschäumen von Kühlschrank- und Kühltruhengehäuse. Die PU-Schaumstoffe eignen sich als Isoliermaterialien, z.B. als Isolierschalen für Rohrleitungen oder Heizungen. Sie finden ferner Verwendung als Wandverkleidungen, Gehäuseteile, Polstermaterialien, Armlehnen, Kopfstützen, Sonnenblenden, Ablagebehälter oder -fächer und Sicherheitsabdeckungen.

Wie bereits dargelegt wurde, finden die nach dem erfindungsgemäßen Verfahren hergestellten PU-Hart- und vorzugsweise PU-Halbhartschaumstoffe bevorzugt Verwendung zur Herstellung von Verbundelementen mit mindestens 2 Deckschichten oder von anderen Formteilen durch Hinterschäumung eines vorgefertigten Bezugsmaterials. Derartige Verbundelemente bestehen aus
A) mindestens einer Deckschicht und
B) mindestens einer Schicht, z.B. einer Kernschicht oder Verstärkungsschicht, aus einem PU-Hart- oder PU-Halbhartschaumstoff, der hergestellt wird durch Umsetzung von
   a) mindestens einem organischen und/oder modifizierten organischen Polyisocyanat mit
   b) mindestens einer höhermolekularen Polyhydroxylverbindung, vorzugsweise einer Polyhydroxylverbindung mit einer Funktionalität von 2 bis 8 und einer Hydroxylzahl von 14 bis 500 und gegebenenfalls
   c) mindestens einem niedermolekularen difunktionellen Kettenverlängerungsmittel und/oder niedermolekularen, tri- oder höherfunktionellen Vernetzungsmittel z.B. solchen mit Molekulargewichten unter 400, vorzugsweise von 60 bis 300
   in Gegenwart von
   d) Wasser oder einer Mischung aus Wasser und mindestens einem physikalisch wirkenden Treibmittel als Treibmittel (d),
   e) gegebenenfalls Katalysatoren,
   f) einem Zusatzstoff (f), ausgewählt aus einer Verbindung der Formel (f1), (f2), (F3) und (f4) oder einer Mischung aus mindestens 2 der genannten Verbindungen (f1) bis (f4) sowie gegebenenfalls zusätzlichen anderen Zusatzstoffen und
   g) gegebenenfalls Hilfsmitteln.

Als Deckschichten (A) können die an sich bekannten Werkstoffe, wie z.B. Papier, Holz, Kunststoffe, Natur-, Kunststoffasern oder Metalle in Form von Folien, Matten, Vliesen und Geweben verwendet werden. Als Werkstoffe sehr gut bewährt haben sich beispielsweise und werden daher vorzugsweise verwendet: Polyvinylchlorid, polyvinylchloridhaltige Polymerisatgemische, thermoplastische Polyurethane, Polyacrylate und thermoplastische Formmassen aus Acrylatpfropfcopolymerisaten und Homo- und/oder Copolymerisaten aus olefinisch ungesättigten Monomeren, wie sie z.B. in den deutschen Patentanmeldung P 44 10 883.4 und P 44 37 501.8 beschrieben werden.

Die Herstellung der Verbundelemente kann nach bekannten Verfahren, z.B. den in Kunststoff-Handbuch, Band 7, Polyurethane, 2. Auflage (herausgegeben von Dr. G. Oertel, 1983, Carl Hanser-Verlag, München, Wien), beschriebenen Verfahren oder analog der Lehre der EP-A-0 490 145, durchgeführt werden. Beispiele Beispiel 1

### A-Komponente: Mischung, die bestand aus

- 43,38 Gew.-Teilen: eines mit einer Mischung aus Glycerin und Wasser im Gewichtsverhältnis 1:0,98 gestarteten Block-polyoxypropylen-polyoxyethylen-polyols mit einer Hydroxylzahl von 30, einem Gehalt an endständig gebundenen Ethylenoxideinheiten von 5,9 Gew.-%, bezogen auf das Gewicht der Propylenoxideinheiten und ca. 70 % primären Hydroxylgruppen,
- 43,2 Gew.-Teilen: eines mit N,N-Dimethylamino-dipropylentriamin gestarteten Polyoxypropylen (86,5 Gew.-%)-polyoxyethylen (13,5 Gew.-$)-polyols mit einer Hydroxylzahl von 35,
- 3,0 Gew.-Teilen: eines Pfropfpolyether-polyols mit einer Hydroxylzahl von 28, hergestellt durch eine radikalische in situ Polymerisation aus einem mit Glycerin gestarteten Polyoxypropylen-polyoxyethylen-polyol als Pfropfgrundlage und einer Mischung aus Styrol und Acrylnitril im Gewichtsverhältnis 12:8 zur Bildung der Pfropfauflage (Lupranol® 4100 der Fa. BASF AG),
- 4,0 Gew.-Teilen: eines mit Glycerin gestarteten Polyoxyethylenpolyols mit einer Hydroxylzahl von 525 und einem Kaliumgehalt von 470 ppm,
- 1,6 Gew.-Teilen: Rizinolsäure,
- 0,2 Gew.-Teilen: Kaliumacetat (40 gew.-%ig in Ethylenglykol),
- 0,08 Gew.-Teilen: einer Mischung aus 50 Gew.-% Di-n-octylzinn-bis-(2-ethylhexylthioglykolat) und 50 Gew.-Teilen Mono-n-actylzinn-tris-(2-ethylhexylthioglykolat),
- 3,54 Gew.-Teilen: einer 65 gew.-%igen wässerigen Lösung von 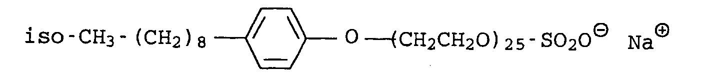 und
- 1,0 Gew.-Teilen: eines sterisch gehinderten Amins (Naugard® 445 der Firma Uniroyal)

### B-Komponente:

Mischung aus Diphenylmethan-diisocyanaten und Polyphenyl-polymethylen-polyisocyanaten (Roh-MDI) mit einem NCO-Gehalt von 31,3 Gew.-%, die, bezogen auf das Gesamtgewicht, enthielt:
37 Gew.-% 4,4'-MDI und 2 Gew.-% 2,4'-MDI.

Zur Herstellung eines PU-Halbhartschaumstoffs wurden
- 100 Gew.-Teile: der A-Komponente
und
- 45,1 Gew.-Teile: der B-Komponente
bei 23°C intensiv durch Rühren gemischt, die Reaktionsmischung in ein offenes Formwerkzeug eingefüllt und dort frei aufschäumen gelassen. Man erhielt einen PU-Halbhartschaumstoff mit einer Dichte von 62,9 g/l.

Beim Verschäumen wurden folgende Schäumdaten gemessen:
- Startzeit:: 12 Sekunden
- Steigzeit:: 82 Sekunden

Zur Hinterschäumung einer Armaturentafel wurde eine Deckfolie aus PVC/ABS in ein auf 40 bis 43°C temperiertes metallisches Formwerkzeug eingelegt.

Zur Hinterschäumung fand eine Hennecke-Schäumapparatur mit einem Mischkopf MQ, der Drosseleinstellung 5, Düsen mit einem Durchmesser von 1,3 mm für die A-Komponente und 0,8 mm für die B-Komponente sowie einer Austragsleistung von 223 g/Sek. Verwendung. Die Schußzeit betrug 4,2 bis 5,05 Sek., was einer Austragsleistung von 920 bis 1126 g entspricht.

Zur Herstellung der Hinterschäumung wurden die A-Komponente mit einer Temperatur von 33°C unter einem Druck von 200 bar und die B-Komponente mit einer Temperatur von 30°C und einem Druck von 200 bar im Gewichtsverhältnis 100:45,1 gemischt, die Reaktionsmischung in das geschlossene Formwerkzeug eingespritzt und dort aufschäumen gelassen. Das Formteil wurde nach 3 Minuten entformt.

Nach dem genannten Verfahren wurden 10 Armaturentafeln lunkerfrei hinterschäumt. Nach einer Lagerung bei 80°C, 1 Stunde, konnten an den Armaturentafeln keine Einfallstellen ermittelt werden.

### Beispiel 2

### A-Komponente: Mischung, die bestand aus

- 42,95 Gew.-Teilen: eines mit N,N-Dimethyl-dipropylentriamin gestarteten Polyoxypropylen (86,5 Gew.-%)-polyoxyethylen (13,5 Gew.-%)-polyols mit einer Hydroxylzahl von 35,
- 42,11 Gew.-Teilen: eines mit einer Startermolekülmischung aus Glycerin und Wasser im Gewichtsverhältnis 1:0,98 gestarteten Blockpolyoxypropylen-polyoxyethylen-polyols mit einer Hydroxylzahl von 30, einem Gehalt an endständig gebundenen Ethylenoxideinheiten von 5,9 Gew.-%, bezogen auf das Gewicht der Polyoxypropyleneinheiten, und ca. 70 % primären Hydroxylgruppen.
- 3,3 Gew.-Teilen: eines Pfropfpolyether-polyols mit einer Hydroxylzahl von 28, hergestellt durch eine radikalische in situ Polymerisation aus einem mit Glycerin gestarteten Polyoxypropylen-polyoxyethylen-polyol als Pfropfgrundlage und einer Mischung aus Styrol und Acrylnitril im Gewichtsverhältnis 12:8 zur Bildung der Pfropfauflage (Lupranol® 4100)
- 4,0 Gew.-Teile: n eines mit Glycerin gestarteten Polyoxyethylenpolyols mit einer Hydroxylzahl von 525 und einem Kaliumionengehalt von 470 ppm,
- 1,0 Gew.-Teilen: eines mit Glycerin gestarteten Blockpolyoxyethylen (62,5 Gew.-%)-polyoxypropylen (27,5 Gew.-%)-polyoxyethylen (10 Gew.-%)-polyols mit einer Hydroxylzahl von 42,
- 0,1 Gew.-Teilen: einer 40 gew.-%igen Kaliumacetatlösung in Ethylenglykol,
- 2,0 Gew.-Teilen: eines mit technischem Tripropylen-tetramin gestarteten Polyoxypropylen-polyols mit einer Hydroxylzahl von 323,
- 3,54 Gew.-Teilen: einer 65 gew.-%igen wässerigen Lösung von 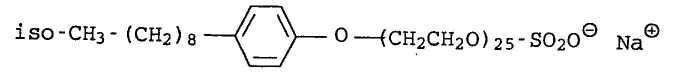
und
- 1,0 Gew.-Teilen: eines sterisch gehinderten Amins (Naugard® 445).

### B-Komponente: analog Beispiel 1.

Zur Herstellung eines PU-Halbhartschaumstoffs wurden
- 100 Gew.-Teile: der A-Komponente
und
- 45,67 Gew.-Teile: der B-Komponente
bei 23°C intensiv durch Rühren gemischt, die Reaktionsmischung in ein offenes Formwerkzeug eingefüllt und dort frei aufschäumen gelassen. Man erhielt einen PU-Halbhartschaumstoff mit einer Dichte von 71 g/l.

Beim Verschäumen wurden folgende Schäumdaten gemessen:
- Startzeit:: 14 Sekunden
- Steigzeit:: 86 Sekunden

Die Hinterschäumung einer Armaturentafel wurde analog den Angaben des Beispiels 1 durchgeführt, wobei jedoch das Gewichtsverhältnis von A-:B-Komponente 100:45,7 betrug.

Die Armaturentafel wurde nach 2,5 Minuten entformt.

Nach einer Lagerung bei 80°C, 1 Stunde, konnten an der Armaturentafel keine Einfallstellen ermittelt werden. Der Fogging-Wert nach DIN 75 201, Verfahren B betrug 0,03 mg.

### Beispiel 3

### Herstellung eines Zusatzstoffs (f2)

Zu 401,29 g (0,3 Mol) eines Addukts aus 1 Mol iso-Nonylphenol und 25 Molen Ethylenoxid, das bei 90°C aufgeschmolzen wurde, fügte man unter Rühren über einen Zeitraum von 4 Stunden portionsweise 21,29 g (0,15 Mol) Phosphorpentoxid, wobei eine maximale Reaktionstemperatur von 130°C nicht überschritten wurde, und rührte ca. 30 Minuten bis zur Bildung einer klaren Lösung nach. Die klare Lösung ließ man auf 60°C abkühlen, fügte unter Rühren 1358,88 g Wasser hinzu und stellte mit 95,0 g (0,475 Mol) einer 20 gew.-%igen wässerigen Natronlauge einen pH-Wert von 7 ein.

### Beispiel 4

### A-Komponente: Mischung, die bestand aus

- 22,74 Gew.-Teilen: eines Blockpolyoxypropylen-polyoxyethylen-polyols (I) mit einer Hydroxylzahl von 30, einem Gehalt an endständig gebundenen Ethylenoxideinheiten von 5,9 Gew.-%, bezogen auf das Gewicht der Propylenoxideinheiten und ca. 70 % primären Hydroxylgruppen, erhalten durch Alkoxylierung einer Startermolekülmischung aus Glycerin und Wasser im Gewichtsverhältnis 1:0,98,
- 45,10 Gew.-Teilen: eines mit N,N-Dimethyldipropylen-triamin gestarteten Polyoxypropylen(86,5 Gew.-%)-polyoxyethylen(13,5 Gew.-%)-polyols mit der Hydroxylzahl 35,
- 3,3 Gew.-Teilen: eines Pfropfpolyether-polyols mit der Hydroxylzahl von 28, hergestellt durch eine radikalische, in situ Polymerisation aus einem mit Glycerin gestarteten Polyoxypropylen-polyoxyethylen-polyol als Pfropfgrundlage und einer Mischung aus Styrol und Acrylnitril im Gewichtsverhältnis 3:2 zur Bildung der Pfropfauflage (Lupranol® 4100 der BASF AG),
- 4,0 Gew.-Teilen: eines mit Glycerin gestarteten Polyoxyethylenpolyols mit einer Hydroxylzahl von 525 und einem Kaliumionengehalt von 470 ppm,
- 1,6 Gew.-Teilen: Ricinolsäure,
- 0,4 Gew.-Teilen: einer 40 gew.-%igen Lösung von Kaliumacetat in Ethylenglykol,
- 2,86 Gew.-Teilen: des Zusatzstoffes (f2) nach Beispiel 3 und
- 20,0 Gew.-Teilen: einer 5 gew.-%igen Lösung eines sterisch gehinderten Amins (Naugard® 445) in dem vorgenannten Blockpolyoxypropylen-polyoxyethylenpolyol mit der Hydroxylzahl von 30 (I).

### B-Komponente: analog Beispiel 1

Die Herstellung einer Armaturentafel wurde analog den Angaben des Beispiels 1 durchgeführt, wobei jedoch die A- und B-Komponenten im Gewichtsverhältnis 100:45 gemischt wurden.

Die nach 2,5 Minuten entformte Armaturentafel zeigte keine Einfallstellen oder Lunker im PU-Halbhartschaumstoff.

## Patentansprüche

1. Verfahren zur Herstellung von Polyurethan-Hart- oder -Halbhartschaumstoffen durch Umsetzung von
a) organischen Polyisocyanaten mit
b) höhermolekularen Polyhydroxylverbindungen und gegebenenfalls
c) niedermolekularen Kettenverlängerungs- und/oder Vernetzungsmitteln
in Gegenwart von
d) Treibmitteln,
e) gegebenenfalls Katalysatoren,
f) Zusatzstoffen und
g) gegebenenfalls Hilfsmitteln
dadurch gekennzeichnet, daß als Treibmittel (d) Wasser verwendet und der Zusatzstoff (f) ausgewählt wird aus mindestens einer Verbindung der Formeln (f1) bis (f4) 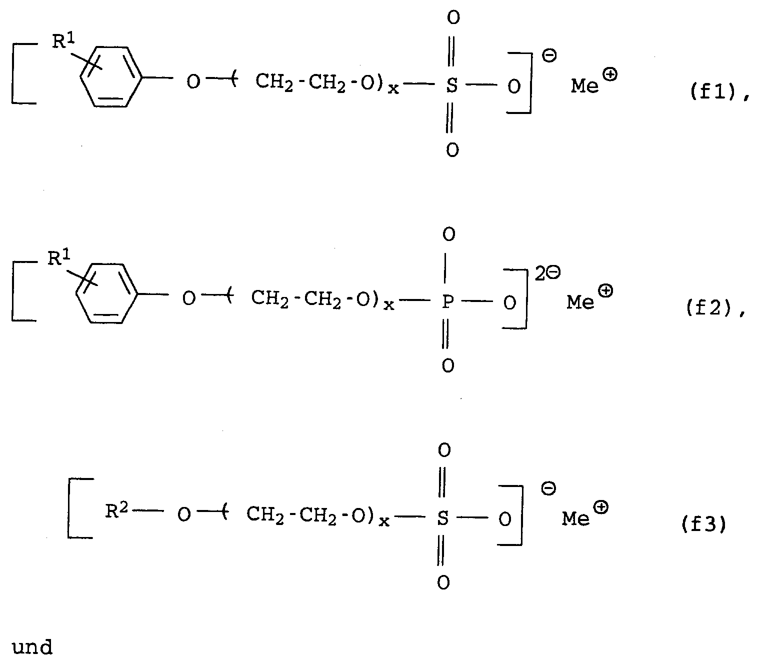 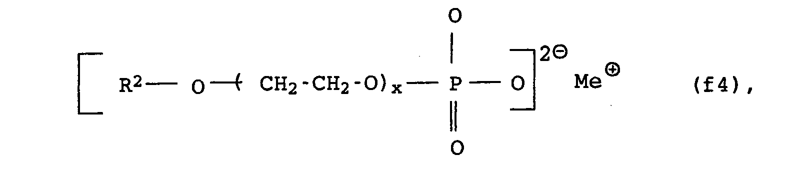 in denen bedeuten
R¹ und R² lineare oder verzweigte Alkylreste mit 1 bis 32 C-Atomen
X eine ganze Zahl von 1 bis 35 und
Me Natrium, Kalium, Ammonium, Calcium und Magnesium mit der Maßgabe, daß die Anzahl der Kationen und Anionen äquivalent ist.

2. Verfahren nach Anspruch 1, dadurch gekennzeichnet, daß die Zusatzstoffe (f1), (f2), (f3) und/oder (f4) in einer Menge von 0,01 bis 2,5 Gew.-%, bezogen auf das Gewicht der höhermolekularen Polyhydroxylverbindungen (b) verwendet werden.

3. Verfahren nach Anspruch 1, dadurch gekennzeichnet, daß die höhermolekularen Polyhydroxylverbindungen (b) eine Funktionalität von 2 bis 8, eine Hydroxylzahl von 14 bis 500 und einen Alkaliionengehalt von kleiner als 10 ppm besitzen.

4. Verfahren nach Anspruch 1, dadurch gekennzeichnet, daß die Vernetzungsmittel (c) Polyoxyalkylen-polyole mit einer Funktionalität von 3 bis 8, einer Hydroxylzahl von 210 bis 1300 und einem Gehalt an Alkaliionen von 150 bis 1200 ppm sind.

5. Verfahren nach Anspruch 1, dadurch gekennzeichnet, daß man als Treibmittel Mischungen aus Wasser und physikalisch wirkenden Treibmitteln verwendet.

6. Verfahren nach Anspruch 1, dadurch gekennzeichnet, daß man das Treibmittel (d) und die Zusatzstoffe (f1), (f2), (f3) und/oder (f4) in Form einer wäßrigen Lösung verwendet.

7. Verbundelemente, die bestehen aus
A) mindestens einer Deckschicht und
B) mindestens einer Schicht aus einem Polyurethan-Hart- oder -Halbhartschaumstoff, der hergestellt wird durch Umsetzung von
a) mindestens einem organischen Polyisocyanat mit
b) mindestens einer höhermolekularen Polyhydroxylverbindung und gegebenenfalls
c) mindestens einem niedermolekularen Kettenverlängerungs- und/oder Vernetzungsmittel
in Gegenwart von
d) Wasser als Treibmittel (d)
e) gegebenenfalls Katalysatoren,
f) einem Zusatzstoff (f), ausgewählt aus mindestens einer Verbindung der Formeln (f1) bis (f4) 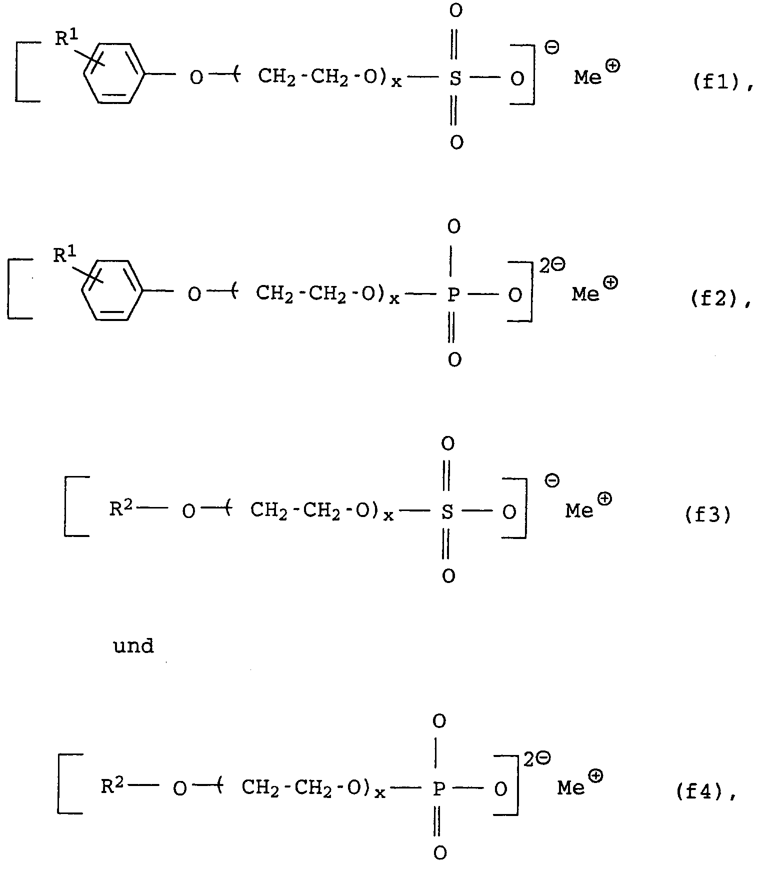 in denen bedeuten
R¹ und R² lineare oder verzweigte Alkylreste mit 1 bis 32 C-Atomen
X eine ganze Zahl von 1 bis 35 und
Me Natrium, Kalium, Ammonium, Calcium und Magnesium mit der Maßgabe, daß die Anzahl der Kationen und Anionen äquivalent ist,
sowie gegebenenfalls zusätzlichen anderen Zusatzstoffen und
g) gegebenenfalls Hilfsmitteln.

8. Verbundelemente nach Anspruch 7, dadurch gekennzeichnet, daß die Deckschicht A besteht aus mindestens einem Werkstoff ausgewählt aus der Gruppe Polyvinylchlorid, polyvinylchloridhaltigen Polymerisatgemischen, thermoplastischen Polyurethanen, Polyacrylaten und thermoplastischen Formmassen aus Acrylatpfropfcopolymerisaten und Homo- und/oder Copolymerisaten aus olefinisch ungesättigten Monomeren.

9. Verbundelemente nach Anspruch 7, dadurch gekennzeichnet, daß der Polyurethan-Hart- oder -Halbhartschaumstoff hergestellt wird unter Verwendung mindestens eines Zusatzstoffs (f1), (f2), (f3) und/oder (f4) in einer Menge von 0,01 bis 2,5 Gew.-%, bezogen auf das Gewicht der höhermolekularen Polyhydroxylverbindungen (b).

10. Verbundelemente nach Anspruch 7, dadurch gekennzeichnet, daß der Polyurethan-Hart- oder -Halbhartschaumstoff hergestellt wird unter Verwendung des Treibmittels (d) und mindestens eines Zusatzstoffs (f1), (f2), (f3) und/oder (f4) in Form einer wäßrigen Lösung.
